# EUROPÄISCHE PATENTSCHRIFT

(11) **EP 3 883 856 B1**
(45) Veröffentlichungstag und Bekanntmachung des Hinweises auf die Patenterteilung: **06.03.2024**
(21) Anmeldenummer: 19816544.1
(22) Anmeldetag: 15.11.2019
(51) Int. Cl.: B65B 7/16, B65B 9/04, B65B 59/04, B33Y 80/00, B29C 65/08, B29C 65/26, B29C 65/76

(54) **3D GEDRUCKTE SIEGELMASKE ODER SIEGELBRILLE**
3D-PRINTED SEALING MASK OR SEALING FRAME
MASQUE DE SCELLAGE OU CADRE DE SCELLAGE IMPRIMÉ EN 3D

(30) Priorität: 20.11.2018 DE 102018219833
(43) Veröffentlichungstag der Anmeldung: 29.09.2021
(73) Patentinhaber: GEA Food Solutions Germany GmbH, 35216 Biedenkopf-Wallau (DE)
(72) Erfinder: RUNTE, Frank, 57334 Bad Laasphe (DE); ASSMANN, Erhard, 35232 Dautphetal (DE)
(74) Vertreter: Kutzenberger Wolff & Partner
(86) Internationale Anmeldenummer: PCT/EP2019/081521
(87) Internationale Veröffentlichungsnummer: WO 2020/104333

(56) Entgegenhaltungen:
- DE-U1-202015 008 814
- US-A- 3 792 567
- US-A- 4 991 375
- US-A1- 2001 000 559
- US-A1- 2017 305 588
- US-B2- 6 834 476

## Beschreibung

Die vorliegende Erfindung betrifft eine Verpackungsmaschine mit einer Siegelmaske und/oder einer Siegelbrille.

Die Siegelmaske einer Siegelstation einer Verpackungsmaschine, wie sie beispielsweise aus der US 3 792 567 A, der US 2001/000559 A1, der US 4 991 375 A, der DE 20 2015 008814 U1, der US 2017/305588 A1 sowie der US 6 834 476 B2 bekannt ist, wird heutzutage gegossen, was fertigungstechnisch sehr aufwändig ist, weil für jede Siegelmaske eine neue Gussform erstellt werden muss. Die Siegelbrille der Siegelstation einer Verpackungsmaschine wird heutzutage spanabhebend hergestellt, was gleichermaßen aufwändig ist.

Es war deshalb die Aufgabe der vorliegenden Erfindung, eine Siegelmaske oder Siegelbrille zur Verfügung zu stellen, die die Nachteile des Standes der Technik nicht aufweist.

Gelöst wird die Aufgabe mit einer Siegelmaske oder Siegelbrille für eine Siegelstation einer Verpackungsmaschine, wobei die Siegelbrille und/oder die Siegelmaske ein 3D gedrucktes Bauteil ist.

Die zu diesem Gegenstand der vorliegenden Erfindung gemachten Ausführungen gelten für die anderen Gegenstände der vorliegenden Erfindung gleichermaßen und umgekehrt. Merkmale, die bezüglich dieses Gegenstandes der vorliegenden Erfindung offenbart wurden, können in Ansprüche zu anderen Gegenständen eingefügt werden und umgekehrt.

Dieser Gegenstand der vorliegenden Erfindung betrifft die Siegelmaske einer Siegelstation einer Verpackungsmaschine. Die Siegelmaske wird zur Herstellung der Siegelnaht eingesetzt. In der Regel wird die Siegelmaske erwärmt. Mit der Siegelmaske wird die Oberwarenbahn, beispielsweise eine Kunststofffolie, gegen die Verpackungsmulde gedrückt und dadurch und unter dem Einfluss von Wärme stoffschlüssig mit dieser verbunden. Der Stoffschluss kann so fest sein, dass er nur durch Überwindung von erheblichen, jedoch menschlichen, Kräften überwunden werden kann. Der Stoffschluss kann aber auch "peelfähig" sein, so dass er vergleichsweise leicht zu lösen ist.

Ein weiterer Gegenstand der vorliegenden Erfindung ist eine Siegelbrille, die ebenfalls Teil der Siegelstation ist. Die Siegelbrille nimmt die geformten Verpackungsmulden auf und wirkt als Gegenlager/Auflager, insbesondere des Muldenrandes, beim Siegeln. Die Siegelbrille kann Kanäle, insbesondere zur Be- bzw. Entgasung der Verpackungen vor dem Siegeln, aufweisen.

Erfindungsgemäß sind die Siegelmaske und/oder die Siegelbrille ein 3D gedrucktes Bauteil, d.h. sie werden jeweils schichtweise aufgebaut. Die zuletzt aufgetragene Schicht(en) wird/werden durch Stoffschluss mit dem bereists vorgesehenen Material der Siegelmaske und der Siegelbrille verbunden. Diese Verbindung kann durch Kleben, Schmelzen/Erstarren und/oder durch ein chemisches Verfahren, beispielweise Polymerisation erfolgen. Das Auftragen des Materials aus dem die Siegelmaske und die Siegelbrille gefertigt sind erfolgt mit einem Auftragungsmittel, das von einem Computer, vorzugsweise in einer Ebene, bewegt wird.

Die Siegelmaske und die Siegelbrille können aus einem oder unterschiedlichen Materialien gefertigt sein. Bei dem Material kann es sich um Kunststoff, beispielsweise Silikon, Metall oder ein Gemisch aus diesen beiden Komponenten handeln. Das Material kann als Granulat/Pulver, als Flüssigkeit oder Paste zur Verfügung gestellt werden. Das Material kann pro Schicht und/oder innerhalb einer Schicht eine unterschiedliche Korngrößenverteilung aufweisen. Die jeweiligen Schichten können zumindest teilweise aus unterschiedlichen Materialien bestehen und/oder innerhalb einer Schicht können unterschiedliche Materialien verwendet werden. Beispielsweise kann die Siegelbrille in einem Bereich, in dem die Siegelnaht peelfähig sein soll aus einem Material mit einem geringeren Wärmeleitkoeffizient und/oder mit einer geringeren Wärmekapazität bestehen, als das restliche Material der Siegelmaske. Gemäß einer bevorzugten Ausführungsform wird beim Aufbau der Siegelmaske lokal, d.h. in einer oder mehreren Schichten und dort auch vorzugsweise nur lokal, eine Struktur aufgebaut, die als Widerstandheizung wirkt. Die Struktur, d.h. die Dicke und/oder die Breite und/oder das Material, der Widerstandheizung kann so aufgebaut sein, dass die der Warenbahn zugewandte Seite der Siegelmaske lokal unterschiedliche Temperaturen und/oder die Siegelmaske lokal unterschiedliche Wärmekapazitäten aufweist. Dadurch lässt sich eine Siegelnaht mit unterschiedlichen Bereichen, beispielsweise "peelfähig" oder "fest" herstellen. Vorzugsweise weist die einer Warenbahn, insbesondere einer Verpackungsfolie, zugewandte Seite der Siegelmaske ein Antihaftmaterial, beispielsweise PTFE, auf. Auch die Siegelbrille kann auf ihrer der Warenbahn zugewandten Seite ein Antihaftmaterial aufweisen, und/oder aus einem Material mit einer geringen Wärmeleitfähigkeit gefertigt sein, damit die für die Siegelung benötigte Wärme nicht abgeleitet wird.

Die Schichten können sich zumindest teilweise in dem mittleren Korndurchmesser der Partikel, aus denen sie gefertigt sind, unterscheiden. Unterschiede bei dem mittleren Korndurchmesser der Partikel können auch lokal innerhalb einer Schicht vorhanden sein. Gemäß einer bevorzugten Ausführungsform weist die Siegelmaske und/oder die Siegelbrille mindestsens einen Kanal auf, durch den ein Medium fließt, insbesondere ein Heiz- und/oder ein Kühlmittel. Dadurch können in der Siegelmaske und/oder Siegelbrille Bereiche mit unterschiedlicher Temperatur erzeugt werden, wodurch beispielsweise die lokalen Eigenschaften der Siegelnaht beeinflusst werden können.

Gemäß einer bevorzugten Ausführungsform der vorliegenden Erfindung weist die Oberfläche der Siegelmaske und/oder der Siegelbrille eine Struktur auf. Bei der Struktur handelt es sich um lokale Erhebungen und/oder Vertiefungen auf der Oberfläche der Siegelmaske und/oder der Siegelbrille. Beispielsweise weist die Oberfläche eine Pyramidenstruktur auf. Die Struktur der Oberfläche der Siegelmaske und/oder der Siegelbrille kann beispielsweise durch vergleichsweise grobe Partikel erzeugt werden, wobei der Teil der Partikel, der die Oberfläche der Siegelmaske und/oder der Siegelbrille bilden, dann vorzugsweise auch nicht verändert, beispielsweise geschmolzen, wird. Alternativ oder zusätzlich wird die Oberflächenstruktur mit Partikeln schichtweise aufgebaut.

Alternativ oder zusätzlich kann die gewünschte Oberflächenflächenstruktur auch erreicht werden, indem die gewünschte Oberflächenstruktur auf einem Grundkörper, beispielsweise einer Grundplatte oder Grundfolie o.ä. als Negativstruktur zur Verfügung gestellt wird und das 3D-gedruckte Teil darauf oder daran aufgebaut wird. Es kann also direkt in die Oberflächenstruktur der Grundplatte o.ä. hineingedruckt werden, die ansonsten typischerweise eine glatte Oberfläche aufweist, damit das gedruckte Teil und die nicht gedruckten Werkstoffpartikel leicht davon ablösbar sind. Das Teil kann dabei "upside-down" aufgebaut werden, da sich dessen Zieloberfläche im Drucker "unten" befindet.

Vorzugsweise wird das fertig gedruckte Teil thermisch nachbehandelt, beispielsweise um ähnlich wie beim Vulkanisierprozess beim Gummi eine innere Vernetzung des Werkstoffs zu erreichen. Dabei können seine Eigenschaften, z. B. die Langzeitstabilität der Elastizität des gedruckten Werkstoffs und/oder dessen Festigkeit und/oder dessen Härte gezielt eingestellt werden. Das thermische Behandeln erfolgt vorzugsweise mit UV- und/oder IR-Licht.

Vorzugsweise weisen die Siegelmaske und/oder Siegelbrille, insbesondere lokal, mindestens einen geschlossenen Hohlraum auf, der insbesondere wärmeisolierend wirkt. Ein derartiger Hohlraum kann beispielsweise im Bereich einer Aufziehlasche vorgesehen sein, in dem keine oder nur eine peelfähige Siegelung zwischen Oberwarenbahn und Unterwarenbahn realisiert werden soll.

Vorzugsweise sind die Siegelmaske und/oder die Siegelbrille schichtweise aus einem partikulären Material aufgebaut. Die Partikel werden, nachdem sie auf die bereits vorhandene Struktur aufgebracht worden sind und/oder bevor sie aufgebracht werden, vorzugsweise zumindest an der Oberfläche geschmolzen und verbinden sich beim Erstarren mit der bereits vorhandenen Struktur der Siegelmaske und/oder der Siegelbrille. Alternativ oder zusätzlich erfolgt die Verbindung durch Kleben. Partikel, die sich nicht mit der bereits vorhandenen Struktur verbinden, werden vorzugsweise wieder entfernt. Dies kann durch Abblasen oder dergleichen erfolgen. Die entfernten Partikel können wiederverwendet oder verworfen werden.

Vorzugsweise weisen die Siegelbrille oder Siegelmaske mindestens eine Schicht auf, bei der die Partikel nur teilweise angeschmolzen sind. Diese Schicht ist vorzugsweise die Oberflächenschicht, die mit der jeweiligen Warenbahn in Kontakt kommt. Durch das nur teilweise Schmelzen der Partikel an der Oberfläche, weist diese eine Struktur auf, die in die Warenbahn prägbar ist. Weiterhin können mit dem nur teilweise Schmelzen der Partikel Hohlräume innerhalb der Siegelmaske oder der Siegelbrille erzeugt werden, die mit Gas, insbesondere Luft, gefüllt sind und dadurch beispielsweise isolierend wirken. Mit Hohlräumen kann aber auch die lokale Härte beispielsweise der Siegelmaske variiert werden.

Noch ein Gegenstand der vorliegenden Erfindung ist eine Siegelstation aufweisend die erfindungsgemäße Siegelbrille und/oder Siegelmaske.

Die zu diesem Gegenstand der vorliegenden Erfindung gemachten Ausführungen gelten für die anderen Gegenstände der vorliegenden Erfindung gleichermaßen und umgekehrt. Merkmale, die bezüglich dieses Gegenstandes der vorliegenden Erfindung offenbart wurden, können in Ansprüche zu anderen Gegenständen eingefügt werden und umgekehrt.

Vorzugsweise ist die Siegelmaske Teil einer Ultraschallsiegelung. Vorzugsweise wird sie an der Sonotrode vorgesehen.

Noch ein Gegenstand der vorliegenden Erfindung ist eine Verpackungsmaschine aufweisend die erfindungsgemäße Siegelstation.

Die zu diesem Gegenstand der vorliegenden Erfindung gemachten Ausführungen gelten für die anderen Gegenstände der vorliegenden Erfindung gleichermaßen und umgekehrt. Merkmale, die bezüglich dieses Gegenstandes der vorliegenden Erfindung offenbart wurden, können in Ansprüche zu anderen Gegenständen eingefügt werden und umgekehrt.

Dieser Gegenstand der vorliegenden Erfindung betrifft eine Verpackungsmaschine. Bei dieser Verpackungsmaschine handelt es sich vorzugsweise um eine sogenannte FFS-Verpackungsmaschine, d. h. eine sogenannte Form-Fill-Seal-Verpackungsmaschine.

Bei einer derartigen Verpackungsmaschine wird eine Warenbahn taktweise entlang der Verpackungsmaschine transportiert. Bei jedem Takt wird mindestens eine, vorzugsweise ein Format bestehend aus mehreren Verpackungsmulden in eine Warenbahn, in der Regel einer Kunststofffolienbahn, beispielsweise durch Tiefziehen, geformt und nach dem Füllen der jeweiligen Verpackungsmulde mit einem Verpackungsgut, werden sie in einer Siegelstation mit einer Oberwarenbahn, bei der es sich in der Regel ebenfalls um eine Kunststofffolienbahn handelt, verschlossen. Jede Verpackung kann mehr als eine Verpackungsmulde aufweisen. Diese Mehrzahl von Verpackungsmulden wird im Folgenden als "Submulden" bezeichnet. Diese Submulden können mit demselben oder jeweils unterschiedlichen Verpackungsgütern bestückt sein. Beispielsweise kann sich in einer Submulde einer Verpackung Käse und in der anderen Submulde Wurst und/oder Schinken oder eine andere Käsesorte befinden. Die Oberwarenbahn kann ebenfalls tiefgezogen sein und somit mindestens einen Dom pro Verpackung aufweisen. In der Siegelstation wird die Oberwarenbahn stoffschlüssig insbesondere durch Siegeln mit der Unterwarenbahn verbunden. Vor dieser Verbindung werden die Verpackungssubmulden und/oder die Verpackungsmulde und der Dom einer Verpackung nun erfindungsgemäß ent- und/oder begast, wobei beim Entgasen ein gewisses Vakuum, d. h. ein gewisser Unterdruck in der Verpackungsmulde erzeugt wird. Beim Begasen erfolgt ein Gasaustausch in der Verpackungsmulde, d. h. die Atmosphäre der Verpackungsmulde wird durch ein Austauschgas zumindest teilweise ersetzt. Dieser Gasaustausch kann sich an eine Entgasung der Verpackungsmulde anschließen. Bei dem Austauschgas kann es sich beispielsweise um Stickstoff, Kohlendioxid, Argon oder Sauerstoff oder eine Mischung aus diesen oder anderen Gasen handeln. Nachdem die Oberwarenbahn stoffschlüssig an der Unterwarenbahn angeordnet ist, werden die so fertiggestellten Verpackungen anschließend aus den Warenbahnen vereinzelt. Dabei kann die Oberwarenbahn getrennt von der Unterwarenbahn durchtrennt werden. Es ist jedoch auch möglich die beiden Warenbahnen gleichzeitig zu durchtrennen.

Bei der erfindungsgemäßen Verpackungsmaschine kann es sich aber auch um einen Traysealer handeln.

Im Folgenden wird die Erfindung anhand der Figuren 1 - 4 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt schematisch eine Form-Füll-Siegel-Verpackungsmaschine.
**Figur 2** zeigt die Siegelbrille.
**Figur 3** zeigt die Siegelmaske.
**Figur 4** zeigt die Struktur auf der Oberfläche der Siegelbrille und/oder Siegelmaske.

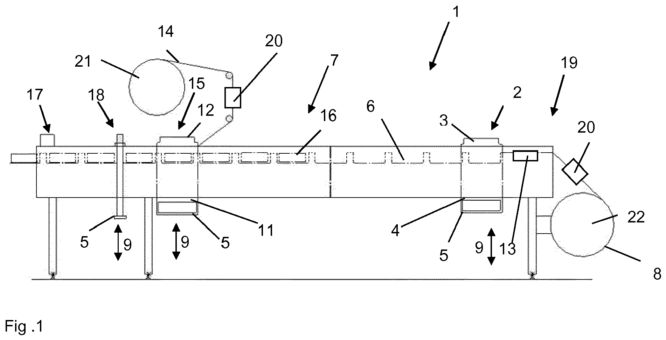

**Figur 1** zeigt die erfindungsgemäße Verpackungsmaschine 1, die eine Tiefziehstation 2, eine Füllstation 7 sowie eine Siegelstation 15 aufweist. Eine Warenbahn 8, hier eine Kunststofffolienbahn 8, die sogenannte Unterwarenbahn, wird von einer Vorratsrolle 22 abgezogen und taktweise, entlang der erfindungsgemäßen Verpackungsmaschine von rechts nach links transportiert. Bei einem Takt wird die Warenbahn 8 um eine Formatlänge weitertransportiert. Die Unterwarenbahn kann zumindest teilweise aus einem anderen Material als Kunstsoff bestehen und wird vorzugsweise über einen Tänzer 20 geführt. Für den Transport der Unterwarenbahn 8 weist die Verpackungsmaschine zwei Transportmittel, in dem vorliegenden Fall jeweils zwei Endlosketten, auf, die rechts und links von der Unterwarenbahn angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel weist eine Vielzahl von Klemmmitteln auf, die die Unterwarenbahn 8 im Einlaufbereich 19 klemmend ergreifen und die Bewegung des Transportmittels auf die Unterwarenbahn 8 übertragen. Im Auslaufbereich der Verpackungsmaschine wird die klemmende Verbindung zwischen dem Transportmittel und der Unterwarenbahn 8 wieder gelöst. In der Tiefziehstation 2, die über ein Oberwerkzeug 3 und ein Unterwerkzeug 4 verfügt, das die Form der herzustellenden Verpackungsmulde bzw. den Submulden aufweist, werden die Verpackungsmulden 6 in die Unterwarenbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 befüllt. In der sich daran anschließenden Siegelstation 15, die ebenfalls aus einem Oberwerkzeug 12 und einem vertikal verstellbaren Unterwerkzeug 11 besteht, wird eine Oberfolie/Oberwarenbahn 14 stoffschlüssig, vorzugsweise durch Siegeln, an der Warenbahn 8 befestigt. Auch in der Siegelstation werden das Oberwerkzeug und/oder das Unterwerkzeug vor und nach jedem Folientransport abgesenkt bzw. angehoben. Auch im Verlauf der Oberwarenbahn kann ein Tänzer 20 angeordnet sein. Vor dem Siegeln der Oberfolie 1 an die Unterfolie 8 wird in der befüllten Verpackungsmulde ein gewisser Unterdruck erzeugt und/oder es erfolgt ein Gasaustausch. Die Erzeugung des Unterdrucks bzw. der Gasaustausch erfolgen vorzugsweise während sich die jeweilige Verpackungsmulde innerhalb der Siegelstation befindet, vorzugsweise unmittelbar, bevor die Siegelwerkzeuge 11, 12 gegeneinandergepresst werden. Auch die Oberfolie 14 kann in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolie gemacht wurden. Im weiteren Verlauf der Verpackungsmaschine werden die fertiggestellten Verpackungen vereinzelt, was in dem vorliegenden Fall mit dem Querschneider 18 und dem Längsschneider 17 erfolgt. Der Querschneider 25 ist in dem vorliegenden Fall ebenfalls mit einer Hubeinrichtung 9 anhebbar bzw. absenkbar. Der Fachmann versteht, dass die erfindungsgemäße Verpackungsmaschine auch ein sogenannter Traysealer sein kann.

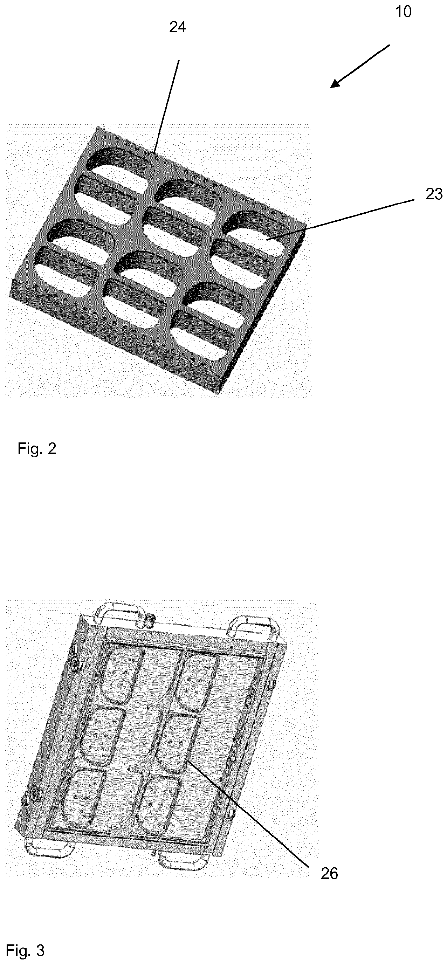

**Figur 2** zeigt eine Siegelbrille, die nach dem 3D-Druckverfahren hergestellt worden ist. Die Siegelbrille weist ein Format von 3 x 2 Ausnehmungen auf, in denen die in die Unterwarenbahn geformten Verpackungsmulden Platz finden. In dem vorliegenden Fall handelt es ich um eine Doppelverpackung mit jeweils zwei Submulden. Die Siegelbrille weist Be- und/oder Entgasungskanäle 24 auf, die vorzugsweise nicht gebohrt sind, sondern sofort beim Druck der Siegelbrille hergestellt werden. Dadurch können die Kanäle von einer geradlinigen Form abweichen und beispielsweise eine Krümmung und/oder einen Hinterschnitt aufweisen.

**Figur 3** zeigt ein Werkzeug der Siegelstation an dem mehrere, hier sechs Siegelmasken vorgesehen sind. Die Form der Siegelmasken entspricht der gewünschten Form der Siegelnaht. Für jede herzustellende Verpackung eines Formates ist vorzugsweise eine Siegelmaske 26 vorhanden. Die Siegelmaske ist durch ein 3D-Druckverfahren hergestellt.

Die Siegelmaske ist vorzugsweise so hart, dass sie sich beim Siegeln etwas aber nicht nennenswert verformt.

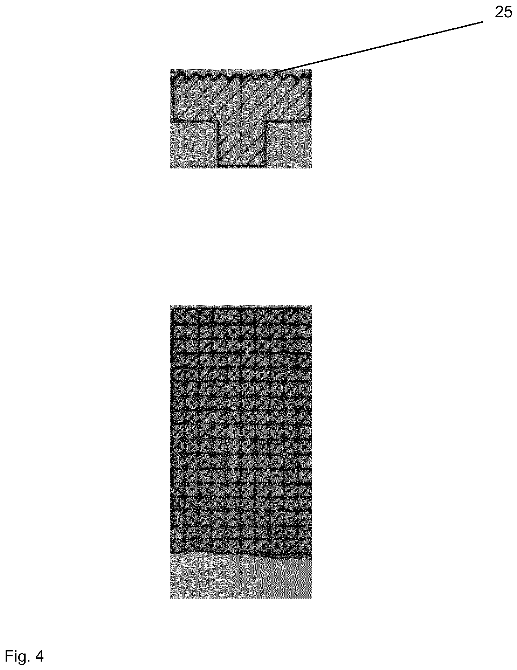

**Figur 4** zeigt die Oberflächenstruktur der Siegelbrille gemäß Figur 2 und/oder der Siegelmaske gemäß Figur 3. Die Oberflächenstruktur ist nicht glatt, sondern weist Erhebungen, hier pyramidenförmige Erhebungen auf. Die Struktur der Oberfläche, insbesondere der Siegelmaske ist zumindest teilweise in der Siegelnaht zu sehen.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde, Mulde, Submulde
- 7: Füllstation
- 8: Unterwarenbahn, Unterfolienbahn
- 9: Hubeinrichtung
- 10: Siegelbrille
- 11: Unterwerkzeug der Siegelstation
- 12: Oberwerkzeug der Siegelstation
- 13: Unterwarenbahnheizung
- 14: Oberwarenbahn, Oberfolienbahn, Deckelfolie
- 15: Siegelstation
- 16: Verpackungsgut
- 17: Längsschneider
- 18: Querschneidestation
- 19: Eingangsbereich
- 20: Tänzer
- 21: Vorrat Oberwarenbahn
- 22: Vorrat Unterwarenbahn
- 23: Ausnehmung für Verpackungsmulde
- 24: Be- und/oder Entgasungsbohrung
- 25: Oberflächenstruktur
- 26: Siegelmaske

## Patentansprüche

1. Siegelmaske (26) oder Siegelbrille (10) für eine Siegelstation (15) einer Verpackungsmaschine (1), **dadurch gekennzeichnet, dass** die Siegelbrille (10) und/oder die Siegelmaske (26) ein 3D gedrucktes Bauteil ist.

2. Siegelmaske (26) oder Siegelbrille (10) nach Anspruch 1, **dadurch gekennzeichnet, dass** die Siegelmaske und/oder Siegelbrille mindestens einen Kanal aufweist, durch den ein Medium fließt, insbesondere ein Heiz- oder ein Kühlmittel.

3. Siegelmaske (26) oder Siegelbrille (10) nach einem der vorangehenden Ansprüche, **dadurch gekennzeichnet, dass** die Oberfläche der Siegelmaske (26) oder Siegelbrille (10) eine Struktur aufweist.

4. Siegelmaske (26) oder Siegelbrille (10) nach einem der vorangehenden Ansprüche, **dadurch gekennzeichnet, dass** die Siegelbrille (10) und/oder die Siegelmaske (26) aus unterschiedlichen Materialien aufgebaut ist.

5. Siegelmaske (26) oder Siegelbrille (10) nach einem der vorangehenden Ansprüche, **dadurch gekennzeichnet, dass** zumindest die einer Verpackungsfolie zugewandte Seite der Siegelmaske oder Siegelbrille ein Antihaftmaterial, beispielsweise PTFE, aufweist.

6. Siegelmaske (26) oder Siegelbrille (10) nach einem der voranstehenden Ansprüche, **dadurch gekennzeichnet, dass** sie mindestens einen geschlossenen Hohlraum aufweisen.

7. Siegelmaske (26) oder Siegelbrille (10) nach einen der voranstehenden Ansprüche, **dadurch gekennzeichnet, dass** sie schichtweise, insbesondere aus geschmolzenen und/oder verklebten Partikeln aufgebaut sind.

8. Siegelbrille (10) oder Siegelmaske (26) nach Anspruch 7, **dadurch gekennzeichnet, dass** sie mindestens eine Schicht aufweist, bei der die Partikel nur teilweise angeschmolzen sind.

9. Siegelstation aufweisend eine Siegelbrille (10) und/oder eine Siegelmaske (26) nach einem der voranstehenden Ansprüche.

10. Siegelstation nach Anspruch 9, **dadurch gekennzeichnet, dass** die Siegelmaske Teil einer Ultraschallsiegelung ist.

11. Verpackungsmaschine aufweisend eine Siegelstation nach einem der Ansprüche 9 oder 10.

## Claims

1. Sealing mask (26) or sealing frame (10) for a sealing station (15) of a packaging machine (1), **characterized in that** the sealing frame (10) and/or the sealing mask (26) is a 3D-printed component.

2. Sealing mask (26) or sealing frame (10) according to Claim 1, **characterized in that** the sealing mask and/or sealing frame has at least one channel through which a medium flows, in particular a heating medium or a cooling medium.

3. Sealing mask (26) or sealing frame (10) according to either of the preceding claims, **characterized in that** the surface of the sealing mask (26) or sealing frame (10) has a structure.

4. Sealing mask (26) or sealing frame (10) according to one of the preceding claims, **characterized in that** the sealing frame (10) and/or the sealing mask (26) is/are formed from different materials.

5. Sealing mask (26) or sealing frame (10) according to one of the preceding claims, **characterized in that** at least that side of the sealing mask or sealing frame that faces towards a packaging film comprises a non-stick material, for example PTFE.

6. Sealing mask (26) or sealing frame (10) according to one of the preceding claims, **characterized in that** it has at least one closed cavity.

7. Sealing mask (26) or sealing frame (10) according to one of the preceding claims, **characterized in that** it is formed in layers, in particular from melted and/or bonded particles.

8. Sealing frame (10) or sealing mask (26) according to Claim 7, **characterized in that** it has at least one layer in which the particles are only partially melted.

9. Sealing station comprising a sealing frame (10) and/or a sealing mask (26) according to one of the preceding claims.

10. Sealing station according to Claim 9, **characterized in that** the sealing mask is part of an ultrasonic sealing system.

11. Packaging machine comprising a sealing station according to either of Claims 9 and 10.

## Revendications

1. Masque de scellage (26) ou cadre de scellage (10) pour un poste de scellage (15) d'une machine d'emballage (1),
**caractérisé en ce que** le cadre de scellage (10) et/ou le masque de scellage (26) correspond (ent) à un composant imprimé en 3D.

2. Masque de scellage (26) ou cadre de scellage (10) selon la revendication 1, **caractérisé en ce que** le masque de scellage et/ou le cadre de scellage présente(nt) au moins un canal par lequel s'écoule un milieu, en particulier un agent chauffant ou réfrigérant.

3. Masque de scellage (26) ou cadre de scellage (10) selon l'une quelconque des revendications précédentes, **caractérisé en ce que** la surface du masque de scellage (26) ou du cadre de scellage (10) présente une structure.

4. Masque de scellage (26) ou cadre de scellage (10) selon l'une quelconque des revendications précédentes, **caractérisé en ce que** le cadre de scellage (10) et/ou le masque de scellage (26) est/sont composé(s) de différents matériaux.

5. Masque de scellage (26) ou cadre de scellage (10) selon l'une quelconque des revendications précédentes, **caractérisé en ce qu'**au moins la face du masque de scellage ou du cadre de scellage qui est tournée vers un film d'emballage présente un matériau anti-adhérent, par exemple du PTFE.

6. Masque de scellage (26) ou cadre de scellage (10) selon l'une quelconque des revendications précédentes, **caractérisé en ce qu'**il présente au moins une cavité fermée.

7. Masque de scellage (26) ou cadre de scellage (10) selon l'une quelconque des revendications précédentes, **caractérisé en ce qu'**il est composé couche par couche, en particulier en particules fondues et/ou collées.

8. Cadre de scellage (10) ou masque de scellage (26) selon la revendication 7, **caractérisé en ce qu'**il présente au moins une couche dans laquelle les particules ne sont fondues que partiellement.

9. Poste de scellage, présentant un cadre de scellage (10) et/ou un masque de scellage (26) selon l'une quelconque des revendications précédentes.

10. Poste de scellage selon la revendication 9, **caractérisé en ce que** le masque de scellage fait partie d'un scellage par ultrason.

11. Machine d'emballage présentant un poste de scellage selon l'une quelconque des revendications 9 ou 10.
